# FASCICULE DE BREVET EUROPEEN

(11) **EP 2 729 516 B1**
(45) Date de publication et mention de la délivrance du brevet: **01.03.2017**
(21) Numéro de dépôt: 12733682.4
(22) Date de dépôt: 05.07.2012
(51) Int. Cl.: C08G 69/26, C08G 69/40

(54) **NOUVEAU POLYAMIDE, PROCEDE DE PREPARATION ET UTILISATIONS**
NEUES POLYAMID, VERFAHREN ZU SEINER HERSTELLUNG UND VERWENDUNG
NOVEL POLYAMIDE, PROCESS FOR PREPARING SAME AND USES THEREOF

(30) Priorité: 08.07.2011 FR 1156223
(43) Date de publication de la demande: 14.05.2014
(73) Titulaire: Rhodia Operations, 93306 Aubervilliers (FR)
(72) Inventeur: JEOL, Stéphane, F-69006 Lyon (FR)
(74) Mandataire: Ridray, Annabelle
(86) Numéro de dépôt international: PCT/EP2012/063092
(87) Numéro de publication internationale: WO 2013/007585

(56) Documents cités:
- CLAUDE MOREAU ET AL: "Recent Catalytic Advances in the Chemistry of Substituted Furans from Carbohydrates and in the Ensuing Polymers", TOPICS IN CATALYSIS, KLUWER ACADEMIC PUBLISHERS-PLENUM PUBLISHERS, NE, vol. 27, no. 1-4, 1 février 2004 (2004-02-01), pages 11-30, XP019292015, ISSN: 1572-9028
- FEHRENBACHER ET AL.: "Synthese und Charakterisirerung von Polyestern une Polyamidees auf der Basis von Furan-2,5dicarbonsa¨re", CHEMIE INGENIEUR TECHNIK, vol. 81, no. 11, 2009, pages 1829-1835, XP002671544, cité dans la demande

## Description

La présente invention concerne un nouveau polyamide, son procédé de préparation et ses utilisations. Elle concerne plus particulièrement un polyamide synthétisé à partir de monomères biosourcés.

Par « biosourcé », on entend qu'il s'agit d'une matière dérivée de ressources renouvelables. Une ressource renouvelable est une ressource naturelle, animale ou végétale, dont le stock peut se reconstituer sur une période courte à l'échelle humaine. Il faut en particulier que ce stock puisse se renouveler aussi vite qu'il est consommé.

A la différence des matériaux issus de matières fossiles, les matières premières renouvelables contiennent une proportion importante de ¹⁴C. Cette caractéristique peut notamment être déterminée par l'une des méthodes décrites dans la norme ASTM D6866, notamment selon la méthode par spectrométrie de masse ou la méthode par spectrométrie à scintillation liquide.

Ces ressources renouvelables sont généralement produites à partir de matière végétale cultivée ou non telle que les arbres, les plantes comme la canne à sucre, le maïs, le manioc, le blé, le colza, le tournesol, la palme, le ricin ou analogues, ou à partir de matière animale telle que les graisses (suif etc.).

Les polymères synthétisés à partir de monomères biosourcés présentent un intérêt important de nos jours car ils permettent de réduire l'empreinte environnementale. Il existe un grand nombre de combinaisons de monomères biosourcés ou de combinaisons de monomères biosourcés et issus de ressources fossiles qui peuvent être utilisées pour générer des polymères dits alors biosourcés. Certains de ces polymères biosourcés peuvent être utilisés pour remplacer des polymères issus de ressources fossiles. C'est le cas par exemple du polyamide PA 6.10, synthétisé à partir d'hexaméthylène diamine (ressource fossile) et d'acide sébacique biosourcé issu de l'huile de ricin, qui peut remplacer le PA 12 (issu de ressources fossiles) dans les applications automobile notamment.

Parmi les monomères biosourcés, un intérêt important se manifeste autour de l'acide 2,5-furanedicarboxylique, obtenu par exemple à partir d'hydroxyméthylfurfural (HMF) lui-même obtenu par exemple à partir des sucres, tel que le glucose.

L'acide 2,5-furanedicarboxylique est notamment utilisé en substitution directe de l'acide téréphtalique, issu de ressource fossile, et en combinaison avec des diols tels que l'éthylène glycol, le 1,3-propane diol ou le 1,4-butanediol, pour synthétiser des polyesters semi-cristallins ayant d'excellentes propriétés que ce soit pour les applications de l'emballage ou encore du textile. Ainsi, le PolyEthylène Furanoate (PEF) peut être utilisé en lieu et place du PolyEthylène Téréphtalate (PET) pour la production de bouteilles.

Industriellement, les polyesters du type PET sont synthétisés principalement par une voie dite d'estérification directe entre l'acide téréphtalique et des diols.

Cependant, des modifications de ces unités industrielles s'avèrent nécessaires afin de synthétiser des PEF de grande qualité, car au cours de cette réaction l'acide 2,5-furanedicarboxylique se dégrade en furane, une molécule toxique, cancérigène et inflammable.

Il est donc plus judicieux de réaliser la synthèse des PEF selon une autre voie industrielle de fabrication des PET à partir des téréphtalates de diméthyle. Appliquée aux PEF, cette voie dite diester, est la réaction entre le 2,5-furanoate de diméthyle et d'un excès de diol, l'excès de diol étant éliminé par distillation sous vide pour faire croître les chaînes polyester.

Les polyamides semi-cristallins tels que le PA 66, le PA 6, le PA 11, le PA 12, le PA 46 ou encore les polyphtalamides PA 6T/66, PA 6T/MT et PA 6T/6I, PA 10T, PA 9T sont des polymères techniques largement utilisés dans les applications telles que l'automobile, le textile ou encore dans le secteur électrique et électronique (E&E). Ils constituent la grande majorité des polyamides commercialisés dans le monde. Les polyamides amorphes sont quant à eux plus marginaux car le caractère amorphe limite souvent les performances applicatives et le domaine de température d'utilisation.

Des polyamides ont également été synthétisés à partir de l'acide 2,5-furanedicarboxylique notamment dans le but de remplacer l'acide téréphtalique par un monomère biosourcé. Contrairement aux polyesters issus de l'acide 2,5-furanedicarboxylique, il apparaît, d'après une étude récente de Ulrich Fehrenbacher publiée dans Chemie Ingenieur Technik (Polymere) 2009, 81, 11, 1829-1835, que les polyamides faits à partir du dérivé diester méthylique de l'acide 2,5-furanedicarboxylique et des diamines commerciales biosourcées (e.g. 1,10-diaminodécane) ou issues de ressources fossiles (e.g. hexaméthylène diamine, 1,12-diaminododécane) sont amorphes.

Cette caractéristique représente un frein au développement des polyamides à partir de l'acide 2,5-furanedicarboxylique car ils ne peuvent pas remplacer les polyamides semi-cristallins issus de ressources fossiles.

De plus, comme pour les polyesters, l'utilisation de l'acide 2,5-furanedicarboxylique pour la fabrication de polyamide est à éviter puisqu'il génère du furane, toxique.

Un autre frein au développement de ces polyamides est le recours à un procédé dit d'aminolyse de diester, c'est-à-dire un procédé qui consiste à faire réagir une diamine avec un diester. En effet, un tel procédé présente deux inconvénients majeurs, contrairement au cas des polyesters synthétisés par la voie dite diester. Le premier inconvénient est l'apparition de réactions secondaires ayant une incidence sur les propriétés thermiques (par exemple la cristallisation) des polyamides. Le second inconvénient est qu'il est nécessaire de travailler avec une quantité stoechiométrique de diamine et de diester pour obtenir des polyamides de hautes masses molaires. Or, il est difficile de maîtriser cette quantité stoechiométrique de diamine et de diester d'un point de vue industriel.

Il existe donc toujours un besoin de proposer de nouveaux polyamides, de préférence semi-cristallins, issus de molécules biosourcées permettant de remplacer les polyamides issus de ressources fossiles.

De plus, il existe aussi un besoin de trouver une voie de synthèse de ces polyamides biosourcés qui soit simple, propre, reproductible et qui utilise avantageusement les équipements industriels déjà en place pour les polyamides classiques tels que le polyamide 66. De plus, le procédé de fabrication permettant de synthétiser ces polyamides devrait avantageusement permettre d'atteindre de hautes masses molaires.

Dans ce contexte, il a été découvert de manière tout à fait surprenante que certaines diamines contenant un cycle furanique et/ou tétrahydrofuranique permettent, notamment en combinaison avec des diacides carboxyliques ou dérivés, de synthétiser de nouveaux polyamides aux propriétés particulièrement intéressantes dans les applications habituelles des polyamides. Ces diamines, avantageusement biosourcées, peuvent être obtenues notamment à partir de l'acide 2,5-furanedicarboxylique biosourcé.

L'invention a donc pour objet un nouveau polyamide comprenant l'unité récurrente de formule I suivante : 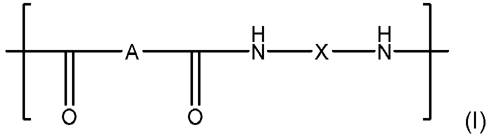 dans laquelle
o A représente une liaison covalente ou un groupe hydrocarboné divalent choisi parmi les aliphatiques saturés ou insaturés, les cycloaliphatiques saturés ou insaturés, les aromatiques comprenant au moins 5 atomes de carbone, les arylaliphatiques et les alkylaromatiques ;
o X représente un groupe divalent de formule II ou III suivantes :

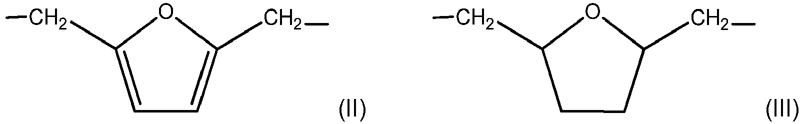

L'invention a aussi pour objet un procédé de préparation du polyamide de l'invention, qui comprend une réaction de polycondensation entre :
o au moins un acide dicarboxylique ou au moins un diester d'acide carboxylique ou au moins un dinitrile de formules respectives IV, IV' et IV" suivantes :

   HOOC-A-COOH (IV);

   ROOC-A-COOR (IV'),

   avec R étant un alkyle en C1-C4 ;

   NC-A-CN (IV")

   avec A tel que défini ci-dessus ;
o au moins une diamine de formule V suivante :

   H₂N-X-NH₂ (V)

   avec X tel que défini ci-dessus.

De plus, l'invention a pour objet l'utilisation du polyamide de l'invention pour la réalisation d'articles par moulage, moulage par injection, injection/soufflage, extrusion/soufflage, extrusion ou filage. La présente invention vise donc aussi les articles obtenus à partir du polyamide selon l'invention, lesdits articles pouvant prendre la forme de pièces moulées ou extrudées, de fils, de fibres, de filaments ou de films.

Les articles ainsi obtenus ont des applications dans de nombreux domaines tels que les plastiques techniques (automobile, E&E, biens de consommation...), les fils industriels, l'industrie textile, les emballages...etc.

La présente invention concerne également des compositions comprenant au moins le polyamide de l'invention et éventuellement des charges de renfort et/ou divers additifs.

Le nouveau polyamide selon l'invention comprend une unité récurrente de formule I telle que décrite ci-dessus dans laquelle A représente une liaison covalente ou un groupe hydrocarboné divalent choisi parmi les aliphatiques saturés ou insaturés, les cycloaliphatiques saturés ou insaturés, les aromatiques, les arylaliphatiques et les alkylaromatiques. Selon l'invention, lorsque A est un groupe hydrocarboné divalent aromatique, il comprend au moins 5 atomes de carbone dans son cycle aromatique, lequel pouvant être interrompu par un hétéroatome tel qu'un atome d'azote.

Par groupe aliphatique saturé, on entend par exemple les groupes alkyles linéaires ou ramifiés ayant de 1 à 36 atomes de carbone. De préférence, on choisira un groupe alkyle linéaire ayant de 4 à 10 atomes de carbone.

Par groupe aliphatique insaturé, on entend par exemple que l'invention n'exclut pas la présence d'une insaturation sur la chaîne hydrocarbonée aliphatique telle qu'une ou plusieurs doubles liaisons qui peuvent être conjuguées ou non, ou bien une triple liaison.

La chaîne hydrocarbonée des groupes aliphatiques ci-dessus peut être éventuellement interrompue par un hétéroatome (par exemple, oxygène, azote, phosphore ou soufre) ou un groupe fonctionnel (par exemple carbonyle) ou porteuse d'un ou plusieurs substituants (par exemple hydroxyle, sulfone) dans la mesure où ceux-ci ne sont pas gênants eu égard les conditions réactionnelles ou l'application envisagée.

Comme exemples préférés pour les groupes A aliphatiques, on peut citer les groupes suivants : -(CH₂)₄-, -(CH₂)₈- et -(CH₂)₁₀-.

Dans la formule (I), A peut également représenter un groupe carbocyclique (ou cycloaliphatique), de préférence monocyclique. Le nombre d'atomes de carbone dans le cycle peut varier de 5 à 8 atomes de carbone mais il est de préférence égal à 5 ou 6 atomes de carbone. Le carbocycle peut être saturé ou comprendre 1 ou 2 insaturations dans le cycle, de préférence de 1 à 2 doubles liaisons.

Comme exemples préférés de groupes carbocycliques et monocycliques pour A, on peut citer le groupe 1,4-cyclohexyle, de préférence le stéréoisomère trans.

Dans d'autres modes de réalisation avantageux de l'invention, A peut également représenter un groupe hydrocarboné divalent aromatique comprenant au moins 5 atomes de carbone dans son cycle aromatique, lequel pouvant être interrompu par un hétéroatome tel qu'un atome d'azote. De préférence, le groupe hydrocarboné divalent aromatique comprend de 6 à 18 atomes de carbone, tel qu'un groupe 1,4-benzène ou 2,6-naphtalène. Il peut également s'agir d'un groupe hydrocarboné divalent arylaliphatique tel que le groupe -(CH₂)ₙ-Ph-(CH₂)_{n'}- avec n et n' étant des entiers avantageusement compris entre 1 et 4, ou un groupe hydrocarboné divalent alkylaromatique tel que le 1,3-benzène-5-tertio butyle. Comme exemples préférés pour les groupes A aromatiques, on choisira un groupe 1,4-benzène.

Selon un mode de réalisation particulier de l'invention, A est un groupe hydrocarboné divalent biosourcé au sens de la présente invention (norme ASTM D6866).

Le nouveau polyamide selon l'invention comprend une unité récurrente de formule I telle que décrite ci-dessus dans laquelle X représente un groupe divalent de formule II ou III suivante :

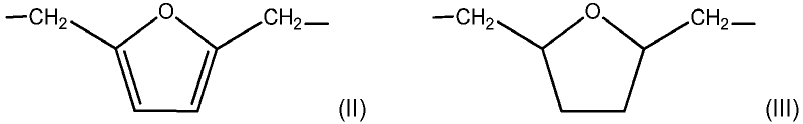

Selon un mode particulièrement avantageux de l'invention, X représente un groupe divalent de formule II.

Dans le mode particulier de réalisation selon lequel X est un groupe divalent de formule III, il peut s'agir du stéréoisomère cis ou trans ou d'un mélange de ceux-ci. De préférence, on choisira le stéréoisomère trans. Pour le stéréoisomère cis, les carbones chiraux en position 2 et 5 peuvent être R,S ou S,R ou un mélange méso. Pour le stéréoisomère trans, les carbones chiraux en position 2 et 5 peuvent être S,S ou R,R ou le mélange racémique.

De façon particulièrement avantageuse, X est biosourcé au sens de la présente invention (norme ASTM D6866).

Selon un mode de réalisation préféré de l'invention, le polyamide de l'invention a une masse molaire moyenne en nombre vraie Mn comprise entre 500 et 50000 g/mol, de préférence entre 2000 et 30000 g/mol et encore plus préférentiellement entre 5000 et 25000 g/mol.

Les masses molaires moyennes en nombre vraies sont déterminées à partir de différentes méthodes connues telles que la Chromatographie par Perméation de Gel. Par « masses molaires moyennes en nombre vraies », on comprendra qu'il ne s'agit pas des mesures en équivalent polystyrène.

Selon un mode avantageux de réalisation, le polyamide selon l'invention comprend majoritairement l'unité récurrente de formule I. Cette unité récurrente de formule I est avantageusement issue de la réaction de polycondensation entre un monomère diacide carboxylique de formule IV : HOOC-A-COOH (IV) avec A tel que défini ci-dessus et un monomère diamine de formule V : H₂N-X-NH₂ (V) avec X tel que défini ci-dessus. Comme expliqué précédemment, le diacide carboxylique peut également être substitué par un diester méthylique, éthylique, propylique ou butylique correspondant (formule IV'), ou bien par un dinitrile correspondant (formule IV").

Par « majoritairement », on entend que le polyamide peut être un homopolyamide constitué totalement de l'unité récurrente de formule I, mais également qu'il peut s'agir d'un copolymère comprenant d'autres unités récurrentes différentes de l'unité de formule I, ces unités récurrentes pouvant être issues de comonomères tels que d'autres diacides carboxyliques, d'autres diamines, des aminoacides et/ou des lactames. Ces comonomères peuvent représenter jusqu'à 50 %, de préférence jusqu'à 30 % et encore plus préférentiellement jusqu'à 15 % en moles de la quantité totale de monomères introduits pour la préparation du polyamide de l'invention.

Les monomères diacide carboxylique de formule IV sont avantageusement choisis parmi : l'acide oxalique, l'acide adipique, l'acide azélaïque, l'acide sébacique, l'acide dodécanedioïque, l'acide téréphtalique, l'acide 2,6-naphtalène dicarboxylique et l'acide 1,4-cyclohexane dicarboxylique, de préférence le stéréoisomère trans.

Ces monomères sont commercialement disponibles et peuvent être biosourcés. Ces monomères sont particulièrement avantageux car ils peuvent conférer un caractère semi-cristallin aux polyamides de l'invention.

Les monomères diamine de formule V sont avantageusement choisis parmi : le 2,5-bis(aminométhyl)furane et le 2,5bis-(aminométhyl)tétrahydrofurane. Dans le mode particulier de réalisation selon lequel le monomère diamine de formule V est le 2,5bis-(aminométhyl)tétrahydrofurane, il peut s'agir du stéréoisomère cis ou trans ou d'un mélange de ceux-ci. De préférence, on choisira le stéréoisomère trans. Pour le stéréoisomère cis, les carbones chiraux en position 2 et 5 peuvent être R,S ou S,R ou un mélange méso. Pour le stéréoisomère trans, les carbones chiraux en position 2 et 5 peuvent être S,S ou R,R ou le mélange racémique.

Ces diamines, avantageusement biosourcées, peuvent être synthétisées par exemple pour le 2,5-bis(aminométhyl)furane par nitrilation de l'acide 2,5-furanedicarboxylique suivie d'une hydrogénation sélective, et d'une hydrogénation du cycle furanique du 2,5-bis(aminométhyl)furane pour préparer le 2,5-bis(aminométhyl)tétrahydrofurane.

Comme comonomères acide dicarboxylique utilisables selon l'invention, il peut s'agir par exemple de l'acide oxalique, l'acide glutarique, l'acide adipique, l'acide subérique, l'acide azélaïque, l'acide sébacique, l'acide 1,12-dodécanedioïque ; l'acide 1,3- ou 1,4-cyclohexane dicarboxylique ; l'acide 1,3- ou 1,4-phénylène diacétique ; l'acide 1,3- ou 1,4-cyclohexane diacétique ; l'acide isophtalique ; l'acide 5-hydroxy-isophtalique ; l'acide téréphtalique ; l'acide 4,4'-benzophénone dicarboxylique ; l'acide 2,6-naphtalène dicarboxylique; et l'acide 5-t-butyl isophtalique, les sels alcalins (Li, Na, K) de l'acide sulfo-5-isophtalique, les dimères d'acide gras en C36 connus sous le nom de PRIPOL.

Ces comonomères sont commercialement disponibles et peuvent être biosourcés.

Les comonomères diamines peuvent par exemple être choisis parmi l'hexaméthylène diamine ; le 1,4-diaminobutane ; le 1,5-diaminopentane ; le 2-méthyl-1,5-diaminopentane ; la 2-méthyl hexaméthylène diamine ; la 3-méthyl-hexa-méthylène diamine ; la 2,5-diméthyl-hexaméthylène diamine ; la 2,2-diméthyl-pentaméthylène diamine ; l'heptane diamine ; la nonane diamine ; la 5-méthylnonane diamine ; le 1,10-diaminodécane ; la dodécaméthylène diamine ; la 2,2,4- et 2,4,4-triméthyl-hexaméthylène diamine ; la 2,2,7,7-tétraméthyl-octaméthylène diamine ; la méta-xylylène diamine ; la paraxylylène diamine ; l'isophorone diamine ; le diaminodicyclohexyl-méthane et les diamines aliphatiques en C2 -C16 qui peuvent être substituées par un ou plusieurs groupements alkyles, les diamines en C36 connues sous le nom de PRIAMINE.

Ces comonomères sont commercialement disponibles et peuvent être biosourcés.

Les comonomères lactames ou aminoacides peuvent par exemple être choisis parmi le caprolactame, l'acide 6-aminohexanoïque ; l'acide 5-aminopentanoïque, l'acide 7-aminoheptanoïque, l'acide 11-aminoundécanoïque, le dodécanolactame.

Ces comonomères sont commercialement disponibles et peuvent être biosourcés.

Plusieurs procédés de fabrication du polyamide selon l'invention sont envisageables, comme décrit précédemment. Ces procédés peuvent être continus ou discontinus.

Un premier procédé proposé par la présente invention est un procédé de préparation du polyamide selon l'invention qui comprend une réaction de polycondensation entre :
o au moins un acide dicarboxylique de formule IV suivante :

   HOOC-A-COOH (IV)

   avec A tel que défini ci-dessus ;
o au moins une diamine de formule V suivante :

   H₂N-X-NH₂ (V)

   avec X tel que défini ci-dessus.

Selon un mode préféré de réalisation de l'invention, au moins une diamine de formule V est biosourcée selon la norme ASTM D6866.

Selon un mode préféré de réalisation de l'invention, au moins un acide dicarboxylique de formule IV est biosourcé selon la norme ASTM D6866.

Ce premier procédé est similaire dans ses conditions au procédé classique de préparation de polyamide du type de ceux obtenus à partir d'acides dicarboxyliques et de diamines, en particulier du procédé de fabrication de polyamide 66 à partir d'acide adipique et d'hexaméthylène diamine ou au procédé de fabrication du polyamide MXD6 par amidification directe à partir d'acide adipique fondu et de méta-xylylène diamine Ces procédés de fabrication de polyamide 66 et de MXD6 sont connus de l'homme du métier. Le procédé de fabrication de polyamide du type de ceux obtenus à partir d'acides dicarboxyliques et de diamines utilise généralement comme matière première, un sel obtenu par un mélange en quantité stoechiométrique en général dans un solvant comme l'eau, d'un diacide avec une diamine. Ainsi, dans la fabrication du poly(hexaméthylène adipamide), l'acide adipique est mélangé avec de l'hexaméthylène diamine généralement dans de l'eau pour obtenir de l'adipate d'hexaméthylène diammonium plus connu sous le nom de sel Nylon ou "Sel N".

Ainsi, dans la fabrication du polyamide selon l'invention, l'acide dicarboxylique de formule IV est mélangé avec la diamine de formule V, généralement dans de l'eau pour obtenir un sel des deux monomères. Comme expliqué plus haut, ces monomères peuvent comprendre jusqu'à 50 %, de préférence jusqu'à 30 % et encore plus préférentiellement jusqu'à 15 % en mole d'autres comonomères tels que décrits précédemment.

La solution de sel est éventuellement concentrée par évaporation partielle ou totale de l'eau. La formation d'un sel sec entre le 2,5-bis(aminométhyl)furane et un diacide de formule IV permet avantageusement d'éviter la dégradation de la diamine.

Le polyamide est obtenu par chauffage à température et pression élevées d'une solution aqueuse des monomères (par exemple une solution de sel telle que décrite ci-dessus), ou d'un liquide comprenant les monomères, pour évaporer l'eau et/ou le liquide tout en évitant la formation de phase solide.

Le milieu de polymérisation peut également comprendre des additifs tels que des agents anti-mousse, des limiteurs de chaîne (molécules monofonctionnelles capables de réagir avec les fonctions acide et/ou amine), des agents de branchement (i.e. molécules ayant au moins trois groupements fonctionnels choisis parmi les groupements acide carboxylique et amine), des catalyseurs, des stabilisants (UV, chaleur, lumière), des agents mâtifiants (comme le TiO2, ...), des lubrifiants, des pigments.

La réaction de polycondensation est généralement effectuée à une pression d'environ 0,5-3,5 MPa (0,5-2,5 MPa) et à une température d'environ 180-320°C (215-300°C). La polycondensation est généralement poursuivie en phase fondue à pression atmosphérique ou réduite de manière à atteindre le degré d'avancement souhaité.

Le produit de polycondensation est un polymère ou prépolymère fondu. A ce stade, le milieu réactionnel peut comprendre une phase vapeur essentiellement constituée de vapeur du produit d'élimination, en particulier d'eau, susceptible d'avoir été formée et/ou vaporisée.

Ce produit peut être soumis à des étapes de séparation de phase vapeur et de finition afin d'atteindre le degré de polycondensation désiré. La séparation de la phase vapeur peut par exemple être réalisée dans un dispositif de type cyclone pour un procédé continu. De tels dispositifs sont connus.

La finition consiste à maintenir le produit de polycondensation à l'état fondu, sous une pression voisine de la pression atmosphérique ou sous pression réduite, pendant un temps suffisant pour atteindre le degré d'avancement désiré. Une telle opération est connue de l'homme du métier. La température de l'étape de finition est avantageusement supérieure ou égale à 200°C et dans tous les cas supérieure à la température de solidification du polymère. Le temps de séjour dans le dispositif de finition est de préférence supérieur ou égal à 5 minutes.

Dans le cas des procédés plus adaptés à la polymérisation du polyamide MXD6, on introduit les deux monomères dans le réacteur sans passer par une phase de salification : on parle de procédé par amidification directe. La réaction est dans ce cas généralement conduite à pression atmosphérique.

Le produit de polycondensation peut également subir une étape de post-condensation en phase solide ou liquide. Cette étape est connue de l'homme du métier et permet d'augmenter le degré de polycondensation à une valeur souhaitée.

Le polyamide obtenu par le procédé de l'invention sous forme fondue peut donc être directement mis en forme ou être extrudé et granulé, pour une éventuelle étape de post-condensation et/ou pour une mise en forme ultérieure après fusion.

Un deuxième procédé de préparation du polyamide selon l'invention est un procédé dit d'aminolyse de diesters, c'est-à-dire que l'on fait réagir au moins une diamine de formule V telle que décrite précédemment avec au moins un diester (formule IV') méthylique, éthylique, propylique ou butylique de l'acide carboxylique de formule IV tel que décrit précédemment. Un procédé similaire appliqué à des monomères différents est d'ailleurs décrit dans la publication de Ulrich Fehrenbacher dans Chemie Ingenieur Technik (Polymere) 2009, 81, 11, 1829-1835. Selon un mode préféré de réalisation de l'invention, au moins une diamine de formule V est biosourcée selon la norme ASTM D6866. Selon un mode préféré de réalisation de l'invention, au moins un diester de formule IV' est biosourcé selon la norme ASTM D6866.

Enfin, la présente invention prévoit également un autre procédé de préparation du polyamide selon l'invention, ledit procédé comprenant la réaction entre au moins une diamine de formule V telle que décrite précédemment et au moins un dinitrile de formule IV" suivante : NC-A-CN (IV") avec A répondant à la même définition que celle donnée plus haut dans la description. Un procédé similaire appliqué à des monomères différents est d'ailleurs décrit dans WO2001/079327. Selon un mode préféré de réalisation de l'invention, au moins une diamine de formule V est biosourcée selon la norme ASTM D6866. Selon un mode préféré de réalisation de l'invention, au moins un dinitrile de formule IV" est biosourcé selon la norme ASTM D6866.

Le polyamide peut être utilisé pour la réalisation d'articles par moulage, moulage par injection, injection/soufflage, extrusion/soufflage, extrusion ou filage. Les articles peuvent ainsi prendre la forme de pièces moulées ou extrudées, de films, de fils, de fibres ou de filaments.

Les articles ainsi obtenus ont des applications dans de nombreux domaines tels que les plastiques techniques (automobile, E&E, biens de consommation), les fils industriels, l'industrie textile, les emballages...etc.

La présente invention concerne également des compositions comprenant au moins le polyamide de l'invention et éventuellement des charges de renfort et/ou divers additifs.

Une telle composition comprend préférentiellement de 1 à 80 % en poids du polyamide selon l'invention, par rapport au poids total de la composition. Celle-ci peut notamment comprendre d'autres types de polymères tels que notamment des polymères thermoplastiques.

La composition peut en outre comprendre des charges de renfort ou de remplissage. Les charges de renfort ou de remplissage sont des charges classiquement utilisées pour la réalisation de compositions polyamides. On peut notamment citer les charges fibreuses de renfort, telles que telles que des fibres de verre, des fibres de carbone, ou des fibres organiques, les charges non fibreuses, telles que des charges particulaires, lamellaires et/ou les nanocharges exfoliables ou non exfoliables comme l'alumine, le noir de carbone, les argiles, le phosphate de zirconium, le kaolin, le carbonate de calcium, le cuivre, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

La composition selon l'invention peut comprendre entre 5 et 60 % en poids de charges de renfort ou de remplissage, préférentiellement entre 10 et 40 % en poids, par rapport au poids total de la composition.

La composition selon l'invention comprenant le polyamide tel que défini précédemment peut comprendre au moins un agent modificateur du choc, c'est-à-dire un composé capable de modifier la résistance aux chocs d'une composition polyamide. Ces composés modificateurs du choc comprennent préférentiellement des groupements fonctionnels réactifs avec le polyamide. On entend selon l'invention par groupements fonctionnels réactifs avec le polyamide, des groupements capables de réagir ou d'interagir chimiquement avec les fonctions acides ou amines du polyamide, notamment par covalence, interaction ionique ou hydrogène ou liaison de van der Walls. De tels groupements réactifs permettent d'assurer une bonne dispersion des agents modificateurs de chocs dans la matrice polyamide. On obtient généralement une bonne dispersion avec des particules d'agents modificateurs de chocs ayant une taille moyenne comprise entre 0,1 et 2 µm dans la matrice.

La composition selon l'invention peut en outre comprendre des additifs usuellement utilisés pour la fabrication de compositions polyamides. Ainsi, on peut citer les lubrifiants, les agents ignifugeants, les stabilisants à la lumière et/ou la chaleur, les plastifiants, les agents nucléants, les agents anti-UV, les catalyseurs, les antioxydants, les antistatiques, les colorants, les matifiants, les additifs d'aide au moulage ou autres additifs conventionnels.

Ces charges et additifs peuvent être ajoutés au polyamide modifié par des moyens usuels adaptés à chaque charge ou additif, tel que par exemple lors de la polymérisation ou en mélange en fondu. Les compositions polyamides sont généralement obtenues par mélange des différents composés entrant dans la composition à froid ou en fondu. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée.

On peut mélanger tous les composés en phase fondue au cours d'une unique opération, par exemple au cours d'une opération d'extrusion. On peut par exemple procéder à un mélange de granulés des matériaux polymériques, les introduire dans le dispositif d'extrusion afin de les fondre et de les soumettre à un cisaillement plus ou moins important. On peut, selon des modes de réalisations particuliers, effectuer des pré-mélanges, en fondu ou non, de certains des composés avant préparation de la composition finale.

La composition selon l'invention, lorsqu'elle est préparée à l'aide d'un dispositif d'extrusion est de préférence conditionnée sous forme de granulés. Les granulés sont destinés à être mis en forme à l'aide de procédés impliquant une fusion pour l'obtention d'articles. Les articles sont ainsi constitués de la composition. Selon un mode de réalisation usuel, on extrude le polyamide modifié sous forme de joncs, par exemple dans un dispositif d'extrusion bi-vis, qui sont ensuite découpés en granulés. Les pièces sont ensuite réalisées par fusion des granulés produits ci-dessus et alimentation de la composition à l'état fondu dans des dispositifs de mise en forme, par exemple de moulage par injection.

La composition selon l'invention permet la réalisation d'articles obtenus par mise en forme de ladite composition par exemple par extrusion, notamment extrusion de plaques, feuilles ou films, moulage, notamment moulage par injection, rotomoulage, soufflage, notamment injection/soufflage, ou filage. On peut citer comme articles ceux utilisés dans le domaine de l'automobile ou de l'électronique et de l'électricité par exemple.

Les articles obtenus peuvent être notamment des pièces moulées, soufflées ou extrudées, des fils, des fibres, des filaments, ou des films.

Le polyamide selon l'invention présente de nombreux avantages. Tout d'abord il est avantageusement au moins en partie biosourcé, ce qui permet de réduire son empreinte environnementale. Il présente également des propriétés mécaniques très intéressantes, une masse molaire élevée et, selon le diacide carboxylique utilisé, il peut être semi-cristallin. Le polyamide de l'invention peut enfin se substituer aux polyamides classiquement utilisés dans les domaines tels que les plastiques techniques (automobile, E&E, biens de consommation), les fils industriels, l'industrie textile, les emballages...etc.

Le procédé de l'invention présente lui aussi de nombreux avantages. Notamment, lorsqu'il s'agit d'un procédé de type « sel », il est très aisé de contrôler la stoechiométrie entre le diacide carboxylique et la diamine. De plus, le procédé ne génère pas de produits de dégradation tels que le furane qui est un produit très toxique. En outre, la préparation du polyamide selon l'invention peut être réalisée au travers des équipements industriels habituellement utilisés dans les usines de fabrication des polyamides du type de ceux obtenus à partir d'acides dicarboxyliques et de diamines, notamment le polyamide 66, et ne nécessite donc pas d'investissement industriel supplémentaire.

D'autres détails ou avantages de l'invention apparaîtront plus clairement à la vue des exemples donnés ci-dessous.

### EXEMPLES

### Méthodes de mesures :

Les températures de fusion (Tf) et de cristallisation au refroidissement (Tc) des polyamides ci-dessous préparés sont déterminées par calorimétrie différentielle à balayage (DSC « Differential Scanning Calorimetry »), à l'aide d'un appareil Perkin Elmer Pyris 1, à une vitesse de 10°C/min. Les Tf et Tc des polyamides sont déterminées au sommet des pics de fusion et de cristallisation. La température de transition vitreuse (Tg), lorsqu'elle est mesurable, est déterminée également à 10°C/min. Les mesures sont faîtes après fusion du polyamide formé à une température T>(Tf du polyamide + 20°C).

### Préparation d'un polyamide à partir d'acide 2,5-furanedicarboxylique (FDCA) et d'hexaméthylène diamine :

Un sel d'acide 2,5-furanedicarboxylique (FDCA) et d'hexaméthylène diamine est préparé par ajout de 2 g de FDCA (0,0128 mol) dans 4,59 g d'une solution aqueuse d'hexaméthylène diamine à 32,5% (0,0128 mol). Une exothermie se produit lors de la salification, le milieu réactionnel est maintenu ensuite à 50°C pendant 2 heures et devient parfaitement limpide. Le sel sec est récupéré puis analysé en Analyse Thermo-Gravimétrique couplée à un détecteur infrarouge : il s'agit de chauffer le sel à 10°C/min. Un dégagement important de CO2 et de furane est détecté à partir de 245°C, c'est à dire lors de la fusion du sel 6FDCA, signe de la dégradation des motifs acide 2,5-furanedicarboxylique. Il n'est donc pas possible de préparer des polyamides de haute masse moléculaire par cette voie. En outre, les oligomères obtenus sont amorphes et présentent une température de transition vitreuse Tg de 110°C, ce qui ne présente pas d'intérêt applicatif.

### Exemples selon l'invention : Préparation de polyamides à partir de 2,5-bis(aminométhyl)furane et de diacides carboxyliques :

Le 2,5-bis(aminométhyl)furane est synthétisé de la manière suivante en 4 étapes :
a. La molécule de départ est le 5-(hydroxyméthyl)furfural (225,0 g, 1,8 mol) qui est introduit dans 1,5L d'éthanol et du NaBH4 (90,0 g, 1,8 mol) est ensuite introduit. Le mélange réactionnel est agité pendant 16 heures à 20°C. Une solution aqueuse à 10% d'HCl est ajoutée lentement de sorte à avoir pH=7. Le solvant est ensuite évaporé par distillation à 40°C sous vide pour donner un solide blanc, qui est recristallisé dans l'éthanol : obtention de 215 g d'un solide jaune (furan-2,5-diméthanol) de pureté égale à 99% (déterminée par LCMS). Rendement de la réaction : 96%.
b. Le furane-2,5-diméthanol obtenu (215,0 g, 1,68 mol) est solubilisé dans de la pyridine (346,5 g, 4,368 mol). La solution est ajoutée goutte à goutte sur une durée d'une heure à une solution de chlorure de thionyle (579,7 g, 4,872 mol) dans 1 L d'acétate d'éthyle à une température comprise entre -20°C et 0°C. Le milieu réactionnel est remis à température ambiante et 3L d'éther de pétrole sont ajoutés, puis ensuite 2L d'eau glacée. La phase organique est lavée par une solution aqueuse à 10% de K₂CO₃ puis séchée. Le solvant est éliminé sous pression réduite pour donner 162,0 g d'une huile brunâtre (2,5-bis(chlorométhyl)furane) de pureté égale à 98% (déterminée par LCMS). Rendement de la réaction : 60%. Le produit se décompose rapidement donc il est utilisé immédiatement pour l'étape suivante.
c. Une solution de 2,5-bis(chlorométhyl)furane (162,0 g, 981,4 mmol) et de NaN3 (192,0 g, 2,955 mol) dans 1,5L de DMSA est agitée à 50°C pendant 16 heures. Le milieu réactionnel est ajouté à 1,5L d'eau glacée, puis extrait par 3 fois avec 800 mL d'éther de pétrole. La phase organique est séchée et concentrée sous vide pour donner 157,5 g d'une huile brune (2,5-bis(azidométhyl)furane) de pureté égale à 99% (déterminée par LCMS). Rendement de la réaction : 90%.
d. Une solution de 2,5-bis(azidométhyl)furane (157,5 g, 885,0 mmol) et de nickel de Raney (68,0 g) dans 1,5L de méthanol est agitée sous 1 atm de H2 à température ambiante. Après 40 heures, la réaction est terminée et le milieu réactionnel est filtré. Le filtrat est concentré pour donner au final 94,5 g d'une huile brune (2,5-bis(aminométhyl)furane) de pureté 99% déterminée par LCMS. Rendement de la réaction : 85%.

Un sel d'acide adipique et de 2,5-bis(aminométhyl)furane (monomère noté F) est préparé par mise en solution à température ambiante des monomères en quantité stoechiométrique (2 g de F (0,0159 mol) et 2,3 g d'acide adipique) à 20 % dans l'eau. Le milieu réactionnel est chauffé à 80°C pendant 2 heures. Il s'agit du sel nommé F6.

Un sel d'acide sébacique et de 2,5-bis(aminométhyl)furane est préparé par mise en solution à température ambiante des monomères en quantité stoechiométrique (2 g de F (0,0159 mol) et 3,2 g d'acide sébacique) à 20 % dans l'eau. Le milieu réactionnel est chauffé à 80°C pendant 2 heures. Il s'agit du sel nommé F10.

Un sel d'acide téréphtalique et de 2,5-bis(aminométhyl)furane est préparé par mise en solution à température ambiante des monomères en quantité stoechiométrique (2 g de F (0,0159 mol) et 2,6 g d'acide téréphtalique) à 20 % dans l'eau. Le milieu réactionnel est chauffé à 80°C pendant 2 heures. Il s'agit du sel nommé FT.

Un sel d'acide isophtalique et de 2,5-bis(aminométhyl)furane est préparé par mise en solution à température ambiante des monomères en quantité stoechiométrique (2 g de F (0,0159 mol) et 2,3 g d'acide isophtalique) à 20 % dans l'eau. Le milieu réactionnel est chauffé à 80°C pendant 2 heures. Il s'agit du sel nommé FI.

Chaque sel est chauffé au-dessus de sa température de fusion et la réaction d'amidification a lieu. Les polyamides obtenus présentent des caractéristiques thermiques satisfaisantes.

Dans le cas du sel d'acide sébacique et de 2,5-bis(aminométhyl)furane, le polyamide PA F10 est obtenu par chauffage du sel sec à 200°C sous balayage d'azote pendant 3 heures. La réaction d'amidification est suivie par le dégagement d'eau de réaction. Le polyamide obtenu présente une fusion étalée entre 170°C et 220°C avec une température de fusion au pic de 213°C. La cristallisation au refroidissement commence à 175°C et se termine à 120°C avec une température de cristallisation au pic de 144°C. Le polyamide est partiellement soluble dans d'acide sulfurique et dans l'acide trifluoroacétique.

### Exemples selon l'invention : Préparation de polyamides à partir de 2,5-bis(aminométhyl)tétrahydrofurane et de diacides carboxyliques :

Le 2,5-bis(aminométhyl)tétrahydrofurane (monomère noté TF) est synthétisé de la manière suivante en trois étapes.

La molécule de départ le tétrahydrofurane-2,5-diméthanol, synthétisé à partir de la réaction dans le méthanol du 5-(Hydroxyméthyl)furfural (HMF) avec le nickel de Raney (1,5 équivalent par rapport à l'HMF) sous pression de 5,84 bars d'H₂ à 60°C pendant 20 heures, filtration et purification par distillation. Un liquide légèrement jaune est obtenu de pureté supérieure à 98% (déterminé par chromatographie / couplée spectroscopie de masse). Rendement de la réaction : 95%.

Le chlorure de méthanesulfonyle (307,8 g, 2,7 mol) est ajouté goutte à goutte à une solution de tétrahydrofurane-2,5-diméthanol (118,8 g, 900 mmol) et de triéthylamine (454,5g, 4500 mmol) dans 1,54 L de dichlorométhane à 0 °C. Le milieu réactionnel est maintenu à 0 °C pendant 1 heure puis ajouté à de l'eau glacée et la phase organique est séparée et lavée avec 500 mL d'une solution d'acide chlorhydrique diluée (1 M). La phase organique est séparée puis lavée avec 500 mL d'une solution aqueuse saturée en NaHCO₃. La phase organique est enfin séparée et concentrée pour donner 236,7 g de (tétrahydrofuran-2,5-diyl)bis(méthylène) diméthanesulfonate sous la forme d'une huile brune de pureté égale à 96% (déterminée par LCMS). Rendement de la réaction : 91,0%. Une solution de (tétrahydrofuran-2,5-diyl)bis(méthylène) diméthanesulfonate (236,7 g, 821,7 mmol) et NaN₃ (270,0g, 4,1094 mol) dans le DMSO (1,350 L) est chauffée à 95°C et agitée une nuit. Le milieu réactionnel est ajouté à de l'eau glacée et extrait avec 3 fois 700 mL d'acétate d'éthyle. Les extraits (phase contenant l'acétate d'éthyle) sont successivement lavés avec de l'eau, une solution aqueuse saturée en NaHCO₃ et séchée une nuit sur MgSO₄ puis filtré pour retirer le MgSO₄. La phase contenant l'acétate d'éthyle est concentrée pour donner 166,5 g de 2,5-bis(azidométhyl)tétrahydrofurane sous la forme d'une huile brune. Un mélange de 2,5-bis(azidométhyl)tétrahydrofurane (166,5 g) et de Pd-C (10%, 10,8 g) dans le méthanol (2,7L) est agité une nuit à température ambiante sous 1 atm de H₂. Le milieu réactionnel est filtré et le filtrat est concentré sous vide pour donner 90,0g de 2,5-bis(aminométhyl)tétrahydrofurane sous la forme d'une huile jaune. Le rendement total des 3 réactions successives est de 75%. Le procédé de synthèse du 2,5-bis(aminométhyl)tétrahydrofurane donne un mélange des isomères cis/trans 90/10 d'après l'analyse en RMN C¹³ dans le méthanol deutéré.

Un sel d'acide sébacique et de 2,5-bis(aminométhyl)tétrahydrofurane, nommé sel TF10, et un sel d'acide adipique et de 2,5-bis(aminométhyl)tétrahydrofurane, nommé sel TF6, sont préparés par mélange de quantités stoechiométriques de diacide et de diamine dans le méthanol. Les sels TF6 et TF10 sont obtenus sous leur forme sèche par évaporation du méthanol sous vide à 40°C pendant une nuit.

Les sels secs TF6 et TF10 sont chauffés chacun à 200°C sous balayage d'azote pendant 3 heures pour obtenir respectivement les polyamides PA TF6 et PA TF10. La réaction d'amidification est suivie par le dégagement d'eau de réaction. Les deux polyamides PA TF6 et PA TF10 sont totalement solubles dans l'acide sulfurique et dans l'acide trifluoroacétique. L'analyse de leurs propriétés thermiques montre que :

Pour le PA TF6 : le polyamide ne cristallise pas lors du refroidissement à 10°C/min mais cristallise lors d'une montée en température à 10°C/min. La cristallisation commence à 110°C et se termine à 170°C, avec une température de cristallisation au pic de 150°C. La fusion s'étale entre 170°C et 205°C avec une température de fusion au pic de 197°C. La température de transition vitreuse est mesurée à 55°C.

Pour le PA TF10: le polyamide présente deux fusions distinctes, dont les températures de fusion au pic sont égales à 171°C et 192°C. La cristallisation au refroidissement s'étale entre 140°C et 80°C, avec une température de fusion au pic de 113°C.

Les polyamides obtenus à partir de 2,5-bis(aminométhyl)tétrahydrofurane et de 2,5-bis(aminométhyl)furane sont donc bien semi-cristallins et peuvent être synthétisés facilement par une voie de polymérisation à partir de sel permettant d'assurer un parfait contrôle de la stoechiométrie des réactifs. Ils peuvent donc être utilisés dans les applications des polyamides semi-cristallins connues.

## Revendications

1. Polyamide comprenant l'unité récurrente de formule I suivante : 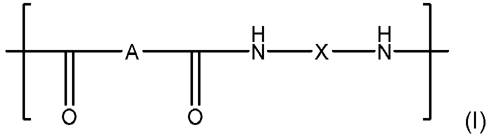 dans laquelle
o A représente une liaison covalente ou un groupe hydrocarboné divalent choisi parmi les aliphatiques saturés ou insaturés, les cycloaliphatiques saturés ou insaturés, les aromatiques comprenant au moins 5 atomes de carbone, les arylaliphatiques et les alkylaromatiques ;
o X représente un groupe divalent de formule II ou III suivantes :

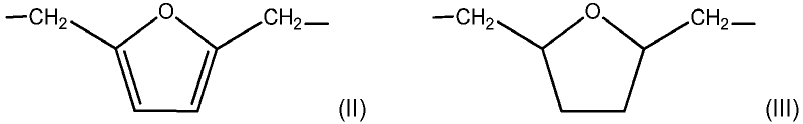

2. Polyamide selon la revendication 1, dans lequel A est choisi parmi les groupes alkyles linéaires ou ramifiés ayant de 1 à 36 atomes de carbone, de préférence un groupe alkyle linéaire ayant de 4 à 10 atomes de carbone.

3. Polyamide selon la revendication 1 ou 2, dans lequel A est choisi parmi -(CH₂)₄-,-(CH₂)₈- et -(CH₂)₁₀-.

4. Polyamide selon la revendication 1, dans lequel A est un groupe hydrocarboné divalent aromatique comprenant de 6 à 18 atomes de carbone, de préférence le groupe 1,4-benzène.

5. Polyamide selon l'une quelconque des revendications 1 à 4, dans lequel X est le groupe divalent de formule II.

6. Polyamide selon l'une quelconque des revendications 1 à 4, dans lequel X est le groupe divalent de formule III.

7. Polyamide selon la revendication 6, dans lequel X est le stéréoisomère trans.

8. Polyamide selon l'une quelconque des revendications 1 à 7, **caractérisé en ce qu'**il s'agit d'un homopolyamide constitué totalement de l'unité récurrente de formule I.

9. Polyamide selon l'une quelconque des revendications 1 à 7, **caractérisé en ce qu'**il s'agit d'un copolymère comprenant d'autres unités récurrentes différentes de l'unité de formule I, lesdites unités récurrentes différentes de l'unité de formule I provenant de comonomères tels que des diacides carboxyliques, des diamines, des aminoacides et/ou des lactames.

10. Procédé de préparation d'un polyamide selon l'une quelconque des revendications 1 à 9, **caractérisé en ce qu'**il comprend une réaction de polycondensation entre :
o au moins un acide dicarboxylique ou au moins un diester d'acide carboxylique ou au moins un dinitrile de formules respectives IV, IV' et IV" suivantes :
HOOC-A-COOH (IV) ;
ROOC-A-COOR (IV'),
avec R étant un alkyle en C1-C4 ;
NC-A-CN (IV")
avec A tel que défini à l'une des revendications 1 à 4 et
o au moins une diamine de formule V suivante :
H₂N-X-NH₂ (V)
avec X tel que défini à l'une des revendications 1 à 7.

11. Procédé selon la revendication 10, **caractérisé en ce qu'**au moins une diamine de formule V est biosourcée selon la norme ASTM D6866.

12. Procédé selon l'une des revendications 10 ou 11, **caractérisé en ce qu'**il comprend d'une réaction de polycondensation entre :
o au moins un acide dicarboxylique de formule IV suivante :
HOOC-A-COOH (IV) ;
avec A tel que défini à l'une des revendications 1 à 4 et
o au moins une diamine de formule V suivante :
H₂N-X-NH₂ (V)
avec X tel que défini à l'une des revendications 1 à 7.

13. Procédé selon la revendication 10 ou 11, **caractérisé en ce qu'**au moins un acide dicarboxylique de formule IV est biosourcé selon la norme ASTM D6866.

14. Utilisation du polyamide selon l'une quelconque des revendications 1 à 9, pour la réalisation d'articles par moulage, moulage par injection, injection/soufflage, extrusion/soufflage, extrusion ou filage.

15. Articles obtenus à partir du polyamide selon l'une quelconque des revendications 1 à 9, lesdits articles étant des pièces moulées ou extrudées, des fils, des fibres, des filaments ou des films.

16. Composition comprenant au moins le polyamide tel que défini à l'une quelconque des revendications 1 à 9, et éventuellement des charges de renfort et/ou divers additifs.

## Patentansprüche

1. Polyamid, umfassend die Wiederholungseinheit der folgenden Formel I: 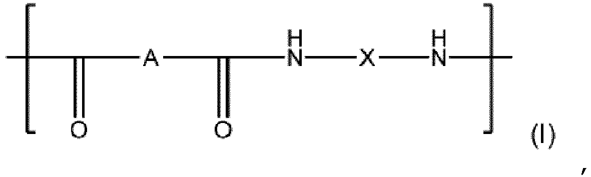 worin:
∘ A für eine kovalente Bindung oder eine zweiwertige Kohlenwasserstoffgruppe, ausgewählt aus gesättigten oder ungesättigten Aliphaten, gesättigten oder ungesättigten Cycloaliphaten, Aromaten mit mindestens 5 Kohlenstoffatomen, Arylaliphaten und Alkylaromaten, steht;
∘ X für eine zweiwertige Gruppe der folgenden Formeln II oder III steht:

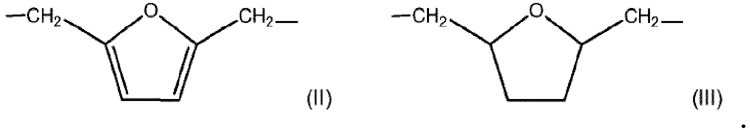

2. Polyamid nach Anspruch 1, worin A aus geraden oder verzweigten Alkylgruppen mit 1 bis 36 Kohlenstoffatomen, vorzugsweise einer geraden Alkylgruppe mit 4 bis 10 Kohlenstoffatomen, ausgewählt ist.

3. Polyamid nach Anspruch 1 oder 2, worin A aus -(CH₂)₄-, -(CH₂)₈- und -(CH₂)₁₀- ausgewählt ist.

4. Polyamid nach Anspruch 1, worin A eine zweiwertige aromatische Kohlenwasserstoffgruppe mit 6 bis 18 Kohlenstoffatomen, vorzugsweise eine 1,4-Benzolgruppe, ist.

5. Polyamid nach einem der Ansprüche 1 bis 4, worin X die zweiwertige Gruppe der Formel II ist.

6. Polyamid nach einem der Ansprüche 1 bis 4, worin X die zweiwertige Gruppe der Formel III ist.

7. Polyamid nach Anspruch 6, worin X das trans-Stereoisomer ist.

8. Polyamid nach einem der Ansprüche 1 bis 7, **dadurch gekennzeichnet, dass** es sich um ein Homopolyamid handelt, das ausschließlich aus der Wiederholungseinheit der Formel I besteht.

9. Polyamid nach einem der Ansprüche 1 bis 7, **dadurch gekennzeichnet, dass** es sich um ein Copolymer handelt, das andere, von der Einheit der Formel I unterschiedliche Wiederholungseinheiten umfasst, wobei diese von der Einheit der Formel I unterschiedlichen Wiederholungseinheiten von Co-Monomeren, wie Dicarbonsäuren, Diaminen, Aminosäuren und/oder Lactamen, stammen.

10. Verfahren zur Herstellung eines Polyamids nach einem der Ansprüche 1 bis 9, **dadurch gekennzeichnet, dass** es eine Polykondensationsreaktion zwischen:
∘ mindestens einer Dicarbonsäure oder mindestens einem Carbonsäurediester oder mindestens einen Dinitril der folgenden Formeln IV, IV' bzw. IV":
HOOC-A-COOH (IV);
ROOC-A-COOR (IV'),
wobei R ein C1-C4-Alkyl ist;
NC-A-CN (IV"),
wobei A wie in einem der Ansprüche 1 bis 4 definiert ist, und
∘ mindestens einem Diamin der folgenden Formel V:
H₂N-X-NH₂ (V),
wobei X wie in einem der Ansprüche 1 bis 7 definiert ist, umfasst.

11. Verfahren nach Anspruch 10, **dadurch gekennzeichnet, dass** mindestens ein Diamin der Formel V entsprechend der Norm ASTM D6866 biologischen Ursprungs ist.

12. Verfahren nach einem der Ansprüche 10 oder 11, **dadurch gekennzeichnet, dass** es eine Polykondensationsreaktion zwischen:
∘ mindestens einer Dicarbonsäure der folgenden Formel IV:
HOOC-A-COOH (IV);
wobei A wie in einem der Ansprüche 1 bis 4 definiert ist, und
∘ mindestens einem Diamin der folgenden Formel V:
H₂N-X-NH₂ (V),
wobei X wie in einem der Ansprüche 1 bis 7 definiert ist, umfasst.

13. Verfahren nach Anspruch 10 oder 11, **dadurch gekennzeichnet, dass** mindestens eine Dicarbonsäure der Formel IV gemäß der Norm ASTM D6866 biologischen Ursprungs ist.

14. Verwendung des Polyamids nach einem der Ansprüche 1 bis 9 zur Herstellung von Gegenständen durch Formpressen, Spritzgießen, Spritz-Blasformen, Extrusions-Blasformen, Extrusion oder Spinnen.

15. Gegenstände, die aus dem Polyamid nach einem der Ansprüche 1 bis 9 erhalten werden, wobei es sich bei den Gegenständen um formgepresste oder extrudierte Teile, Garne, Fasern, Filamente oder Folien handelt.

16. Zusammensetzung, die mindestens das Polyamid nach einem der Ansprüche 1 bis 9 und gegebenenfalls verstärkende Füllstoffe und/oder verschiedene Additive umfasst.

## Claims

1. Polyamide comprising the repeating unit of formula I below: 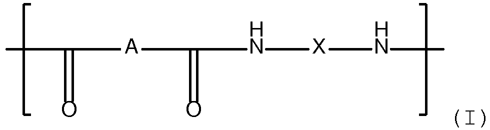 in which
o A represents a covalent bond or a divalent hydrocarbon-based group chosen from saturated or unsaturated aliphatics, saturated or unsaturated cycloaliphatics, aromatics comprising at least 5 carbon atoms, arylaliphatics and alkylaromatics;
o X represents a divalent group of formula II or III below:

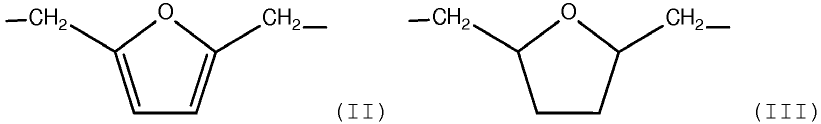

2. Polyamide according to Claim 1, in which A is chosen from linear or branched alkyl groups containing from 1 to 36 carbon atoms, preferably a linear alkyl group containing from 4 to 10 carbon atoms.

3. Polyamide according to Claim 1 or 2, in which A is chosen from -(CH₂)₄-, -(CH₂)₈- and -(CH₂)₁₀-.

4. Polyamide according to Claim 1, in which A is a divalent aromatic hydrocarbon-based group comprising from 6 to 18 carbon atoms, preferably the group 1,4-benzene.

5. Polyamide according to any one of Claims 1 to 4, in which X is the divalent group of formula II.

6. Polyamide according to any one of Claims 1 to 4, in which X is the divalent group of formula III.

7. Polyamide according to Claim 6, in which X is the trans stereoisomer.

8. Polyamide according to any one of Claims 1 to 7,
**characterized in that** it is a homopolyamide consisting entirely of the repeating unit of formula I.

9. Polyamide according to any one of Claims 1 to 7,
**characterized in that** it is a copolymer comprising other repeating units different from the unit of formula I, the said repeating units different from the unit of formula I originating from comonomers such as dicarboxylic acids, diamines, amino acids and/or lactams.

10. Process for preparing a polyamide according to any one of Claims 1 to 9, **characterized in that** it comprises a polycondensation reaction between:
o at least one dicarboxylic acid or at least one carboxylic acid diester or at least one dinitrile of respective formulae IV, IV' and IV" below:
HOOC-A-COOH (IV);
ROOC-A-COOR (IV'),
with R being a C1-C4 alkyl;
NC-A-CN (IV")
with A as defined in one of Claims 1 to 4 and
∘ at least one diamine of formula V below:
H₂N-X-NH₂ (V)
with X as defined in one of Claims 1 to 7.

11. Process according to Claim 10, **characterized in that** at least one diamine of formula V is biosourced according to standard ASTM D6866.

12. Process according to either of Claims 10 and 11, **characterized in that** it comprises a polycondensation reaction between:
o at least one dicarboxylic acid of formula IV below:
HOOC-A-COOH (IV);
with A as defined in one of Claims 1 to 4 and
o at least one diamine of formula V below:
H₂N-X-NH₂ (V)
with X as defined in one of Claims 1 to 7.

13. Process according to Claim 10 or 11, **characterized in that** at least one dicarboxylic acid of formula IV is biosourced according to standard ASTM D6866.

14. Use of the polyamide according to any one of Claims 1 to 9, for making articles by moulding, injection-moulding, injection/blow-moulding, extrusion/blow-moulding, extrusion or spinning.

15. Articles obtained from the polyamide according to any one of Claims 1 to 9, the said articles being moulded or extruded pieces, yarns, fibres, filaments or films.

16. Composition comprising at least the polyamide as defined in any one of Claims 1 to 9, and optionally reinforcing fillers and/or various additives.
